# EUROPEAN PATENT SPECIFICATION

(11) **EP 1 611 756 B1**
(45) Date of publication and mention of the grant of the patent: **08.11.2006**
(21) Application number: 05731346.2
(22) Date of filing: 22.03.2005
(51) Int. Cl.: H04Q 7/34, H04L 12/56

(54) **METHOD, APPARATUS, COMPUTER PROGRAM PRODUCT AND ARRANGEMENT FOR TESTING RADIO NETWORK DATA CONNECTIONS**
VERFAHREN, VORRICHTUNG, COMPUTERPROGRAMM-PRODUKT UND ANORDNUNG ZUM TESTEN VON FUNKNETZDATENVERBINDUNGEN
PROCEDE, DISPOSITIF, PRODUIT DE PROGRAMME INFORMATIQUE ET SYSTEME POUR TESTER DES CONNEXIONS DE DONNEES DE RESEAU DE RADIOCOMMUNICATION

(30) Priority: 26.03.2004 FI 20045108
(43) Date of publication of application: 04.01.2006
(73) Proprietor: Nemo Technologies Oy, 90460 Oulunsalo (FI)
(72) Inventor: KUOKKANEN, Jari, FI-90250 Oulu (FI)
(74) Representative: Pykälä, Timo Tapani
(86) International application number: PCT/FI2005/050100
(87) International publication number: WO 2005/094106

(56) References cited:
- EP-A1- 1 489 866
- WO-A1-00/38449
- WO-A2-02/05486
- DE-C1- 19 708 793
- US-A- 5 875 397

## Description

### FIELD

The invention relates to a testing apparatus for radio network data connections, a method for testing radio network data connections, and a computer program product.

### BACKGROUND

Operators have a need for finding out the capacity of data transfer in a radio network. Testing of this kind can be carried out in various ways, for example by testing internal load in one radio network, by comparing the capacity to that of the competitors' radio networks, or by testing various supported data transfer techniques with one another either within the same radio network or between different radio networks. Different data transfer techniques may be examined in respect of their capacity or handover between different data transfer techniques, for example.

Radio network terminals, which are controlled by a 'host computer', may be employed in testing. Thus the testing may be simultaneously carried out in the same place, which is important since the load and efficiency of a radio network vary considerably depending on the terminal location and testing time. The testing may employ a test server or a real server, which is connected to the network to be tested through the Internet, for example. Nowadays the TCP/IP (transmission control protocol / Internet protocol) protocol is usually employed in data transfer.

A problem arising in testing is that when several dial-up connections are opened from one host computer to terminals, all "socket connections" to be established travel along one connection between the host computer and the terminal, i.e. all dial-up connections are routed via one and the same terminal, not via different terminals and their interfaces. This problem distorts the test results, making them useless.

According to prior art, this problem has been solved by using one host computer per each terminal. This can be implemented either by really providing a complete host computer (for example a portable computer) for each terminal or by providing a portable computer with an accessory including a sufficient number of independent host computers. These solutions are, however, relatively cumbersome and expensive since they require additional hardware parts. The structure of the testing software may also become unnecessarily complicated.

Publications WO 00/38449, WO 02/05486, DE 19708793, US 5875397 and EP 1489866 all disclose various aspect of communication system testing; however, none of these recognizes the above-mentioned problem nor its solution.
In particular, WO-A-00 38449 discloses an arrangement, where a cluster of mobile units are interfaced via an IP server port with an IP network (that may be wireless). The IP server port has its own, unique IP address so that it handles only those data packets which are intended for mobile units within this particular cluster. The IP server port has an external connection to receive/transmit data packets from and to the IP network, as well as individual ports for each of the mobile units. The IP server port routes individual packets received by the cluster to designated mobile units. A monitoring/controlling computer issues (e.g., testing) commands to individual mobile units. A data packet created by the computer may include the IP address of the cluster, the command and an individual mobile unit identifier. Thus, the cluster of mobile units is connected via a single connection to the server (e.g. Internet server) over an IP network (e.g., the Internet) to the (testing) computer.

### BRIEF DESCRIPTION

The object of the invention is to provide an improved testing apparatus for radio network data connections, an improved method of testing radio network data connections, and an improved computer program product.

According to an aspect of the invention, there is provided a testing apparatus for radio network data connections, the apparatus comprising at least two radio network terminals and a host computer, which is configured to establish, by means of the terminals, simultaneous data connections in accordance with the Transmission Control Protocol / Internet Protocol TCP/IP protocol or the User Datagram Protocol / Internet Protocol UDP/IP protocol to at least one server connected to the radio network and to measure each established data connection separately. The host computer is configured to establish each data connection to a different public Internet Protocol IP address of the server and to dynamically establish a dedicated unambiguous route for each data connection, whereby the data connections to different IP addresses travel along different routes via different terminals and their air interfaces.

According to an aspect of the invention, there is provided a method of testing radio network data connections, comprising: establishing, by means of radio network terminals, simultaneous data connections in accordance with the Transmission Control Protocol / Internet Protocol TCP/IP protocol or the User Datagram Protocol / Internet Protocol UDP/IP protocol from the host computer to at least one server connected to the radio network; and measuring each established data connection separately. The method further comprises: establishing each data connection from the host computer to a different public Internet Protocol IP address of the server; and dynamically establishing a dedicated unambiguous route for each data connection, whereby the data connections to different IP addresses travel along different routes via different terminals and their air interfaces.

According to an aspect of the invention, there is provided a computer program product, which encodes a computer software, that, when installed in a host computer, provides the host computer with host means for establishing, utilizing radio network terminals, simultaneous data connections in accordance with the Transmission Control Protocol / Internet Protocol TCP/IP protocol or the User Datagram Protocol / Internet Protocol UDP/IP protocol to at least one server connected to the data network, and measuring means for measuring each established data connection separately. The host means establish each data connection to a different public Internet protocol IP address of the server and dynamically establish a dedicated unambiguous route for each data connection, whereby data connections to different IP addresses travel along different routes via different radio means and their interfaces.

The invention provides several advantages. The solution according to the invention requires only one host computer. The invention provides reliable measurement results in different test situations. The solution allows flexible testing of radio networks. The size of the testing apparatus according to the invention is moderate, and thus it is easy to transport in a vehicle or even on foot. The solution enables testing of multi-channel data transfer from one host computer.

### LIST OF FIGURES

The invention will now be described in greater detail by means of preferred embodiments, with reference to the accompanying drawings, in which
Figure 1 illustrates an embodiment of a testing apparatus for radio network data connections and connections of the testing apparatus to the radio networks to be tested,
Figure 2 illustrates embodiments of network interfaces of the servers used in testing,
Figure 3 illustrates an embodiment of the testing apparatus,
Figure 4 illustrates the structure of a TCP/IP protocol stack,
Figure 5 illustrates an embodiment of the testing apparatus,
Figure 6 is a flow chart illustrating an embodiment of a method of testing radio network data connections, and
Figure 7 illustrates establishment of routes.

### DESCRIPTION OF EMBODIMENTS

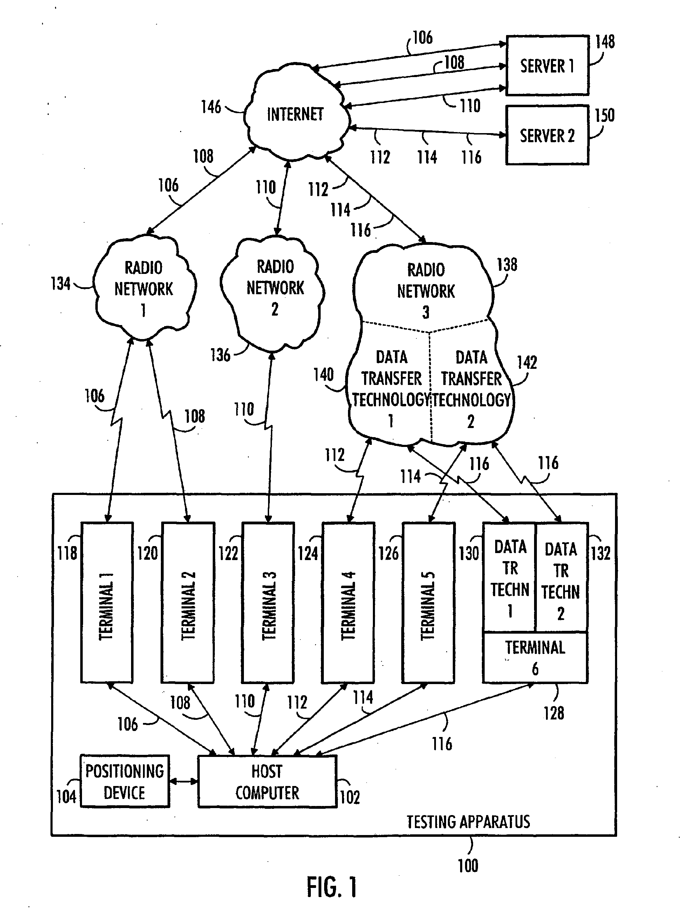

Referring to Figure 1, the structure of a testing apparatus 100 for radio network data connections and connections of the testing apparatus 100 to networks 134, 136, 138 to be tested will be described. The radio networks 134, 136, 138 may be, for example, second-generation, 2.5-generation or third-generation public land mobile networks (PLMN). Examples of such mobile communication networks include GSM (General System for Mobile Communications), GPRS (General Packet Radio Service), UMTS (Un i-versal Mobile Communications System) and TETRA (Terrestrial Trunked Radio).

The radio network may simultaneously support more than one different data transfer technique: in Figure 1, the radio network 138 supports two different data transfer techniques 140, 142. The data transfer technique may be of the packet-switched or of the circuit-switched type. In this context, the data transfer technique refers to various multi-use and modulation methods, for instance. Examples of data transfer techniques are EDGE (Enhanced Data Rates for Global Evolution), CSD (Circuit-Switched Data), HSCSD (High-Speed CSD), CDMA (Code Division Multiple Access), WCDMA (Wideband Code Division Multiple Access) and TDMA (Time Division Multiple Access).

The radio network 134, 136, 138 may be a network other than a mobile communication network. An example of another kind of radio network is a wireless local area network (WLAN). An example of WLAN is the wireless local area network defined in the standards of the 802.11 series by the IEEE (The Institute of Electrical and Electronics Engineers, Inc.).

The testing apparatus 100 includes at least two radio network terminals. In the embodiment of Figure 1, there are six terminals 118, 120, 122, 124, 126, 128. The terminal may be, for example, an ordinary subscriber terminal, a mobile station, a wireless network card, or a terminal designed and manufactured especially for test use by the producer. The terminal 128 is special in the respect that it supports two different data transfer techniques 130, 132. The terminal 128 may be, for example, a dual-band phone (or even a triband phone) or it may support second-generation, 2.5-generation and third-generation air interfaces. The terminal 128 can be employed for testing the functionality of handovers upon switching from one data transfer technique to another, for instance. The terminal 128 may also support the simultaneous use of both data transfer techniques 130, 132.

The testing apparatus includes a host computer 102. The host computer 102 may be an ordinary portable computer, for instance.

The host computer 102 is configured to establish, employing the terminals 118, 120, 122, 124, 126, 128, simultaneous data connections 106, 108, 110, 112, 114, 116 in accordance with the TCP/IP (Transmission Control Protocol / Internet Protocol) protocol or the UDP/IP (User Datagram Protocol / Internet Protocol) protocol to at least one server 148, 150 connected to the radio network 134, 136, 138.

The host computer 102 may be an electronic digital computer comprising the following main parts: a central processing unit (CPU), a working memory and a system clock. In addition, various peripherals, such as a display, a keyboard, an audio card and loudspeakers, and a data storage unit, may be connected to the computer. The central processing unit comprises three main parts: registers, an arithmetic logic unit (ALU) and a control unit. The data structures and software required in programming can be implemented by a programming language. The host computer 102 can be configured by programming, i.e. by creating software and data structures that contain the required functionality. Also, pure hardware implementations are feasible, for example a circuit made up of separate logic components or one or more application-specific integrated circuits (ASIC). A hybrid of these implementations is conceivable, too. On selecting the implementation, a person skilled in the art will pay attention to the requirements set for the size and power consumption of the devices as well as to the necessary processing power, the production costs and the production lots, for instance.

The host computer 102 is configured to establish each data connection 106, 108, 110, 112, 114, 116 to a different public IP (Internet Protocol) address of the server 148, 150 and to dynamically establish a dedicated unambiguous route for each data connection 106, 108, 110, 112, 114, 116, whereby the data connections 106, 108, 110, 112, 114, 116 to different IP addresses travel along different routes via different terminals 118, 120, 122, 124, 126, 128 and their air interfaces. The host computer 102 may be configured to establish the data connections 106, 108, 110, 112, 114, 116 as dial-up connections.

Furthermore, the host computer 102 is configured to measure each established data connection 106, 108, 110, 112, 114, 116 separately.

The server 148, 150 may be, for example, an ordinary server computer. The server 148, 150 may be, for example, a WWW (World Wide Web) server or a server employing a protocol other than the HTTP (Hypertext Transfer Protocol), for example an FTP (File Transfer Protocol) server. The server 148, 150 may be an ordinary server used in production or a server intended particularly for test use. The server 148, 150 may be connected to the radio network 134, 136, 138 through the Internet 146, but other solutions are also feasible; for example, the server may be part of the radio network or the server may be connected to the radio network by means other than the data transfer network.

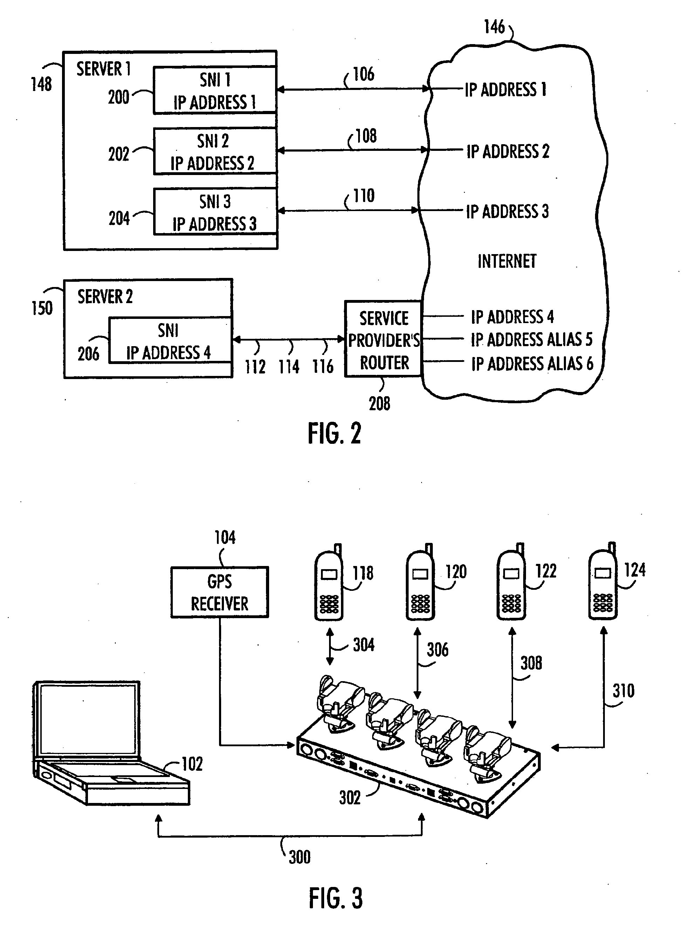

Figure 2 illustrates embodiments of the network interfaces of the servers 148, 150. The server 148 is connected to the Internet 146 by three different network interfaces 200, 202, 204, each of which has a dedicated public IP address. The second server 150 is connected to the Internet by only one network interface 206 having one public IP address. The Internet service provider's (ISP) router 208 has been provided with two 'aliases' of this one public IP address, in which case three public IP addresses are in practice shown outside the server.

The testing apparatus 102 can perform various measurements and tests. For example, employing the terminals 118 and 120, data connections 106, 108 implemented by one data transfer technique can be tested within the radio network 134 of one operator. Correspondingly, terminals 124 and 126 can test data connections implemented by different data transfer techniques 140, 142 within the radio network 138 of one operator. It is also feasible to compare data connections, for example 106, 110, 112, implemented by the same data transfer techniques within the radio networks 134, 136 of different operators. Furthermore, data connections, for example 106, 110 and 112, implemented by different data transfer techniques may be compared to one another within the different radio networks 134, 136, 138 of different operators.

The data transfer connection between the host computer 102 and the terminal 118, 120, 122, 124, 126, 128 can be implemented by fixed or wireless prior art connections, for example by Bluetooth® or another short-range transceiver, such as an IrDA (The Infrared Data Association) transceiver, via USB (Universal Serial Bus), via an RS-232 port or via a PCMCIA (Personal Computer Memory Card International Association) slot.

As illustrated in Figure 3, the terminals 118, 120, 122, 124 may be placed in a specific rack 302. The rack 302 may include a communication port, through which a data transfer connection 300 is implemented to the host computer 102 utilizing USB, for example. The terminals 118, 120, 122, 124 may be attached mechanically to the rack 302 to facilitate transportation. The data transfer connection 300 may be divided between the terminals 118, 120, 122, 124 in the rack by means of cables 304, 306, 308, 310, for example.

The testing apparatus 100 may also include a positioning device 104, which in the embodiment of Figure 3 is a GPS (Global Positioning System) receiver. The positioning device 104 may also be based on another prior art positioning technique, such as positioning performed by the terminal 118 and/or the radio network 134. Utilizing the positioning device 104, the measurements results obtained by the testing apparatus 100 can be associated with an exact time and place.

The testing performed by the testing apparatus 100 may comprise simultaneous data transfers, and the transfer results may be compared with one another directly and/or statistically. Several test series may be performed utilizing different internet protocols (FTP, HTTP, SMTP, etc.). In the tests, socket connections may be opened, utilizing the above-mentioned protocols, to the server 148, 150, which is fixed or semi-fixed to the Internet 146, and further to the radio network 134, 136, 138. Other tests, such as voice calls, can thus be performed parallel with the data testing, but only data connections are dealt with here since the functioning of the solution is not dependent on the presence of other test types.

In the testing, predetermined test files whose size and packing (redundancy) are known can be transferred from the server 148, 150, but the testing may also be carried out by transferring varying content found in the Internet, such as WWW pages or broadcast-type audio/video data (stream). The terminals 118, 120, 122, 124, 126, 128 having a public IP address enable the transfer of test data (for example audio, image, video, files) between two terminals, too.

The tests can be performed at one geographic location. If necessary, the testing apparatus 100 can also be moved between the tests or during them. The testing can be performed as tests drives in a city, suburb or on the road, for instance. Test drives are usually carried out by placing the testing apparatus 100 in a car, but it may also be placed in public means of transport, trucks, lorries, etc.

The testing apparatus 100 may function automatically. The testing apparatus 100 may also be a semi-automatic system which is remote-controlled (through the radio network or another wireless network) in a centralized manner and integrated in a vehicle or in a fixed place. The testing apparatus 100 may also be used inside. If necessary, the testing apparatus 100 may be moved around a building on foot, for instance.

The testing may be performed in order to find a fault reported by customers, to statistically compare capacity or to carry out a statistical temporal comparison by performing the same tests always at the same time (the same moment or week day, etc.). The testing apparatus 100 consists of terminals 118, 120, 122, 124, 126, 128, which are connected to one host computer 102 to enable centralized controlling of different data transfers by one program, simultaneous initiation of transfers, as easy transportation of the testing apparatus as possible, and testing of different networks/techniques at the same time because the network load varies considerably depending on the time and place.

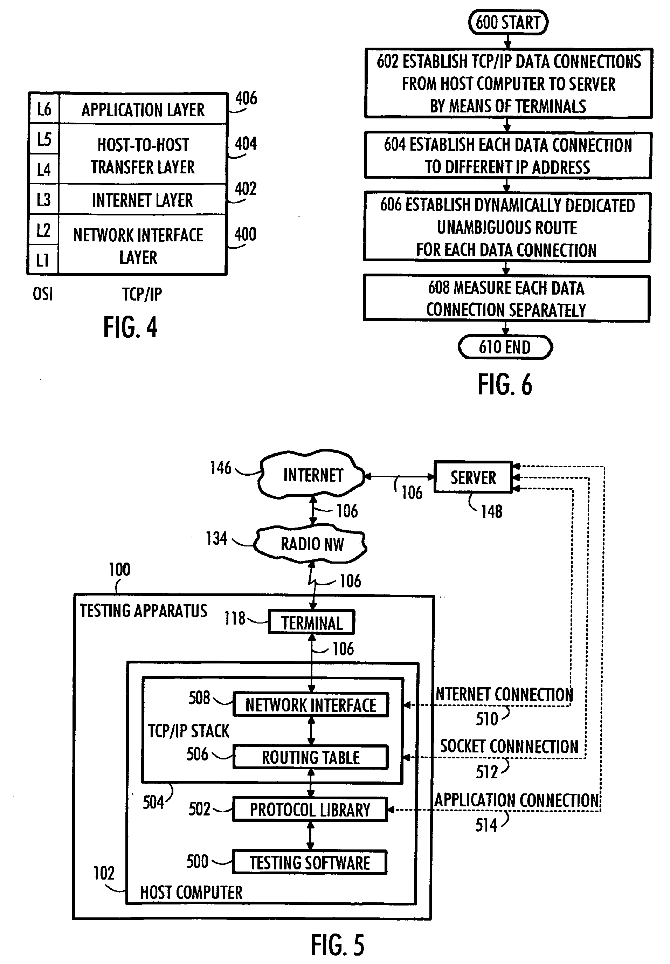

Since the TCP/IP protocol is very well known in the field, it will not be described in greater detail here, but the readers are urged, if necessary, to familiarize themselves with its specifications as well as with the numerous textbooks where it is described. Figure 4, however, illustrates the TCP/IP protocol stack at the general level and compares it with the seven-layer protocol stack of the OSI (Open Systems Interconnection) model. A network interface layer 400 corresponds to layers one and two in the OSI model. The network interface layer 400 includes physical network techniques and protocols, for example Ethernet, ATM (Asynchronous Transfer Mode), Token Ring and Frame Relay. An Internet layer 402 corresponds to layer three of the OSI model and comprises lower protocols, such as IP, ARP and ICMP. A host-to-host transport layer 404 corresponds to layers four and five of the OSI model and includes TCP and UDP. An application layer 406 corresponds to layer six of the OSI model and includes higher protocols, such as FTP, HTTP, SMTO, POP3, etc. The TCP/IP protocol stack has no counterpart for layer seven of the OSI model. The protocols used in connection with the TCP/IP protocol include the following (RFC = "Request for Comments" = documents where the Internet Engineering Task Force (IETF) and Internet Engineering Steering Group (IESG) define the protocols concerned):
**ARP - Address** Resolution Protocol [RFC 826].
**BOOTP -** Boot Protocol.
**CHARGEN -** Character Generator Protocol [RFC 864].
**DAYTIME -** Daytime Protocol [RFC867].
**DHCP -** Dynamic Host Configuration Protocol [RFC 2131, 1534].
**DISCARD -** Discard Protocol [RFC 863].
**DNS -** Domain Name System [RFC 1065, 1035, 1123, 1886, 2136, 2181].
**ECHO -** Echo Protocol [RFC 862].
**FTP -** File Transfer Protocol [RFC 959].
**HTTP -** Hypertext Transfer Protocol.
**ICMP -** Internet Control Message Protocol [RFC 792].
**IP -** Internet Protocol [RFC 791, 894, 919, 922, 1042, 1828, 1852; 2401, 2402, 2406].
**NetBIOS -** NetBIOS Service Protocols [RFC 1001, 1002].
**POP3 -** Post Office Protocol, version 3.
**QUOTE -** Quote of the Day Protocol [RFC 865].
**SMTP -** Simple Mail Transfer Protocol.
**SNMP -** Simple Network Management Protocol [RFC 1157].
**TCP -** Transmission Control Protocol [RFC 793, 1144, 1323, 2018, 2581].
**TFTP -** Trivial File Transfer Protocol [RFC 783].
**TELNET -** Telnet Protocol [RFC 854].
**UDP -** User Datagram Protocol [RFC 768].
**VOIP -** Voice Over IP Protocol.

Furthermore, the following brief descriptions on the concepts used are provided:
**Data connection -** See socket.
**Dynamic IP address -** an IP address that the computer obtains using the DHCP or BOOTP protocol and that usually (but not necessarily) changes when the computer is started.
**Non-public IP address -** an IP address that is not shown in the Internet but is determined only internally in a local network.
**IP address -** a 32-bit network address according to the IP protocol.
**Host computer -** a portable computer, a desktop computer or an integrated computer [RFC1 122, 1123] with TCP/IP support and at least one active socket.
**Public IP address -** an IP address that is shown to all computers connected to the Internet.
**Server -** any computer which has at least one public IP address and provides a TCP/IP service to the Internet via at least one port.
**Port -** a port according to the TCP/IP protocols (1-65535) to which a socket connection is established.
**Terminal -** a radio network terminal capable of data connection, shown to a computer as a socket.
**Routing table -** a collection of routes for routing IP traffic to different network interfaces.
**Static IP address -** an IP address determined permanently for a computer that does not change unless it is modified.
**Computer -** a portable computer, a desktop computer or an integrated computer, comprising mobile stations and PDAs (Personal Digital Assistant) as well as other devices provided with a microprocessor and programs. **Network Interface -** a network card, a mobile station, a wireless network card, a modem or any device that enables a TCP/IP connection from and to a host computer.
**Netmask -** a 32-bit mask of an IP address for determining subnetworks, for example; used also in routing for searching for the best route to the destination address.
**Socket -** a socket established by TCP or UDP from the computer to another computer; consists of an IP address and a port number.
**Gateway -** a destination to which a packet is send, the gateway reperforms routing comparison and continues transmission of the packet.

Figure 5 illustrates an embodiment of the testing apparatus 100. The actual testing software 500 runs on the host computer 102. The testing software 500 establishes TCP/IP data transfer connections utilizing a protocol library 502. The protocol library 502 uses the TCP/IP stack for establishing data transfer connections. The TCP/IP stack 504 includes a routing table 506 and an interface 508. According to the general operating principle of the protocol stack, peer layers establish connections between themselves, of which Figure 5 illustrates an Internet connection 510, a socket connection 512 and an application connection 514 between the testing apparatus 100 and the server 148.

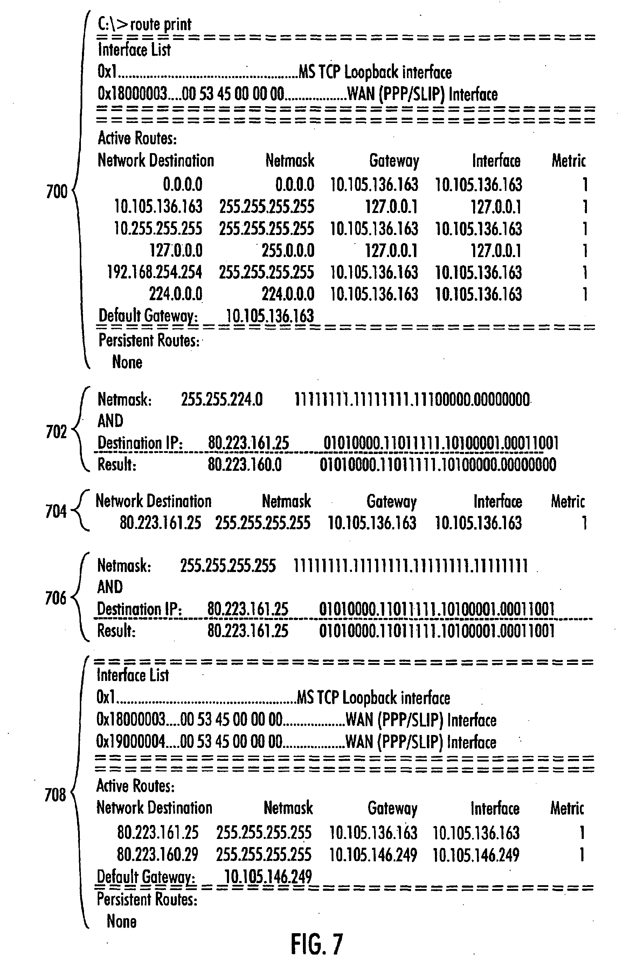

The establishment of routes will be described next with reference to Figure 7.

The purpose is thus to compare two or more data transfers with each other by the testing apparatus 100 so that the transfers are independent of each other. A test file is transferred though a first connection. Subpackets of the file may not travel through other connections and, to ensure that the transfer speed and other parameters are correct, packets of other connections may not pass through this connection.

When a socket is opened, the operating system of the host computer 102 creates a few standard routes in the routing table for establishing a connection to the domain name server (DNS) and to the servers 148, 150 connected to the Internet or to other terminals.

Figure 7 illustrates an example of the routing table 700 when one data connection has been opened. One row denotes one route and each route consists of a destination IP address, a netmask, a gateway and an interface. When a program running on the host computer 100 contacts a server 148, 150 connected to the radio network, the IP system of the host computer 102 goes through the routes in the routing table 506 one by one, selects the best socket and places its packet in the transmission queue. In the example, 10.105.136.163 is the IP address of the socket WAN (Wide Area Network) visible to the network, and 127.0.0.1 is a local host, i.e. a local address by means of which programs running on the host computer 102 can establish socket connections between each other.

In the route comparison process, the system performs a logical AND operation between the route netmask and the destination address of the outgoing packet. The result of this operation is compared to the route destination address and the operation is repeated on each route. The route that is selected is the one whose comparison yields the best congruence when the bits of the masked address and destination address are compared from left to right. If all routes appear to be equal, the packet is transmitted to a default gateway. After the route has been selected, the packet is transferred to the outgoing queue of the route socket.

In Figure 7, reference number 702 denotes an example of masking when the server IP address is 80.223.161.25 and the netmask 255.255.224.0 (the address is shown in decimal form on the left and in binary form on the right). The resulting address 80.223.160.0 represents a subset of Internet addresses from address 80.223.160.0 to address 80.223.191.255 (altogether 8192 addresses). This result is compared to the route destination address. The larger the number of equal bits found starting from the beginning, the more congruent the packet destination address is with the route destination address.

If more connections (a packet-switched or circuit-switched dial-up connection or another socket) are then opened to the Internet, corresponding routes are formed for them in the routing table, except that the default gateway remains the same. In that case, comparisons are carried out on the outgoing packet in the same way as in the case of one connection, but the table contains two or more equally good connections, in which case the default gateway is used and all packets are routed there. The situation would be the same even if the destinations consisted of separate servers at different IP addresses since each socket provides access everywhere in the Internet, i.e. the sockets are mutually equal in respect of routing. The Internet was designed as fault tolerant and provided with automatic routing, for which reason it does not allow the definition of the routes along which packets are carried.

Since the purpose is to measure the transfer speed of each connection (and other quality of service, i.e. QoS, parameters) separately, i.e. the band received through the air interface of each operator, the results are completely erroneous.

The problem cannot be circumvented because each outgoing packet from the testing software 500 will finally end in the TCP/IP protocol stack 504 and thus appears equal to the rest of the packets; in other words, the prior art system includes no mechanism for sorting packets into correct sockets.

Prior art solutions are based on the fact that there are no problems in the case of one packet because there is only one socket to which the packets may travel. By arranging one complete host computer for each terminal, several connections can be tested simultaneously independently of one another. Solution of this kind can be based on the use of several portable computers, each of which is connected to only one data connection terminal, or the solution may be a device incorporating several integrated computers; however, the basic topology is the same in all these solutions: one terminal per one host computer. Naturally, the computers may locally communicate with one another through a local area network (i.e. they also comprise Ethernet or another secondary socket), which does not disturb data testing since the packets are not allowed to travel to external connections of other computers unless a computer is specifically configured to function as a router or bridge.

The above solutions are expensive and inconvenient to use because the mutual controlling of measurements requires either the use of several computers or specific testing software for controlling the computers that perform the actual measurements. Even after this, it is difficult to obtain the measurement results simultaneously on the same screen for comparison.

This application describes a software solution which utilizes a routing system in such a manner that the routes added by the system are removed from the routing table and replaced by one route for each socket, the route being unambiguous to a certain destination IP address.

The solution comprises a dedicated destination IP address for each terminal. This can be implemented, for example, by installing several network cards in the server 148 and assigning a dedicated public IP address to each card, the address of course being different for each card. Alternatively, the ISP in whose network the server 150 is defines public IP address aliases for the public IP address of the server into its routing system. The aliases are routed to the only public address of the server 150. The server 148, 150 thus has several public IP addresses in both cases.

The testing software 500 running on the host computer 102 selects one of the public addresses of the server for each terminal. When a connection opens, the testing software 500 may remove the common routes that appear in the routing table 506 and set one route that determines that the packets addressed to the destination address have only one route out of the host computer 102. This route is particularly the data connection of the terminal to which the destination IP address has been connected (this connection may be software internal and not a strong connection: only one destination IP is selected for one terminal so that each has a separate destination address).

In Figure 7, reference number 704 denotes an example of an unambiguous route (known as a host route). If one public IP address of the server is 80.223.161.25 and a connection is established to it, the masking yields the result as denoted by reference number 706. Consequently, exactly the same address is obtained as before the masking. If the destination address of the packet is compared to the route destination address after the masking, it will be noted that they are exactly the same, i.e. completely congruent, and consequently, the route in question is the best possible one. Now the IP address received by the terminal is set as the route gateway, and the packets transmitted to this IP address of the server are inevitably guided to the same and only to one terminal/socket.

If more connections are opened and the same procedure is performed on them, this will result in a routing table 506 where the outgoing routes include only one possible route for each IP address of the server, and consequently, all the connections remain separate over the air interface.

In Figure 7, reference number 708 denotes an example where two connections with IP addresses 10.105.136.163 and 10.105.146.249 have been opened and a different public IP address of the server has been set for both. The two public IP addresses of the server are 80.223.161.25 and 80.223.160.29.

The host computer 102 can thus be configured to dynamically establish a dedicated unambiguous route for each data connection by defining a dedicated socket, netmask and gateway for each different IP address in the routing table.

If the testing software 500 wishes to transfer test files to find out the capacity of the air interfaces, it first establishes a TCP/IP connection to the first address and then to the second address, and after the connections are open, it starts to transfer a file (this example deals with the FTP protocol but other protocols also function in the same way) over both connections (i.e. transfers two files, i.e. one file over each connection). The set routes then control the packets to the correct sockets in both directions.

If, for example, the networks of the same operator utilizing the same technique are tested by two terminals, in practice the data flows join immediately after the air interface (travel through the same routers or another similar network infrastructure), but since the situation thereafter is exactly the same for both connections, the only difference is created in the air interface, whose capacity was to be measured in the first place. In the testing of the networks of different operators, the data flows do not join until in the Internet 146, but in practice the radio network backbone of different operators has so good a capacity that the data flows do not at least significantly influence either connection so as to substantially decrease the reliability of the measurement results. The testing apparatus 100 can thus test several simultaneous data connections 106,108, 110, 112, 114, 116 from the same host computer 102 without the data connections interfering with each other and without a need for more than one server (several separate servers may also be used).

In the following, a method of testing radio network connections will be described with reference to Figure 6. The method starts in 600 when the necessary equipment is switched on and testing is started.

First in 602, simultaneous data connections according to the TCP/IP protocol or the UDP/IP protocol are established using radio network terminals from the host computer to at least one server connected to the radio network. This is implemented by establishing, in 604, each data connection from the host computer to a mutually different public IP address of the server and establishing dynamically a dedicated unambiguous route for each data connection in 606, whereby the data connections to different IP addresses travel along different routes via different terminals and their air interfaces. After this in 608, each established data connection can be measured separately. The testing continues until one wishes to end the testing or predetermined tests have been performed, after which the method ends in 610.

In an embodiment, a dedicated unambiguous route is established dynamically in 606 for each data connection by determining a dedicated socket, netmask and gateway for each different IP address in the routing table.

In an embodiment, the data connections are established as dial-up connections in 602.

In an embodiment, the data connections to be established by the terminal include at least one of the following: data connections of one operator implemented by the same data transfer technique, data connections of one operator implemented by different data transfer techniques, data connections of different operators implemented by the same data transfer techniques, data connections of different operators implemented by different data transfer techniques.

The testing apparatus 100 described above may be employed for implementing the method, but other kind of apparatuses may also be suitable for carrying out the method. The method can also be modified employing the embodiments described above in connection with the testing apparatus 100.

The method can be implemented as a computer program product which is installed in a host computer and which encodes a computer process for testing radio network data connections. The computer process concerned is similar to the method described above. The computer program product may be stored in a computer program distribution medium. The computer program distribution medium is readable by the host computer. The distribution medium may be any prior art medium for distributing a computer program from the producer/seller to the end user. For example, the distribution medium may be a medium readable by a data processing device, a program storage medium or a storage medium, a memory readable by a data processing device or a software distribution package, or a signal understood by a data processing device, a telecommunication signal or a compressed software package.

Even though the invention was described above with reference to the example according to the enclosed drawings, it is clear that the invention is not restricted thereto, but it may be modified in various ways within the scope of the appended claims.

## Claims

1. A testing apparatus (100) for radio network data connections which comprises:
at least two radio network (134) terminals (118, 120), and
a host computer (102), which is configured to establish, by means of the terminals (118, 120), simultaneous data connections (106, 108) in accordance with the Transmission Control Protocol / Internet Protocol TCP/IP protocol or the User Datagram Protocol / Internet Protocol UDP/IP protocol to at least one server (148) connected to the radio network (134) and to measure each established data connection (106, 108) separately,
**characterized in that** the host computer (102) is configured to establish each data connection (106, 108) to a different public Internet Protocol IP address of the server and to dynamically establish a dedicated unambiguous route for each data connection (106, 108), whereby the data connections (106, 108) to different IP addresses travel along different routes via different terminals (118, 120) and their air interfaces.

2. A testing apparatus according to claim 1, **characterized in that** the host computer (102) is configured to dynamically establish a dedicated unambiguous route for each data connection (106, 108) by defining a dedicated socket, netmask and gateway for each different IP address in a routing table.

3. A testing apparatus according to claim 1 or 2, **characterized in that** the host computer (102) is configured to establish the data connections (106, 108) as dial-up connections.

4. A testing apparatus according to any of the preceding claims, **characterized in that** the data connections (106, 108) established by the terminal (118, 120) comprise at least one of the following: data connections of one operator implemented by the same data transfer technique, data connections of one operator implemented by different data transfer techniques, data connections of different operators implemented by the same data transfer techniques, data connections of different operators implemented by different data transfer techniques.

5. A method of testing radio network data connections, comprising:
establishing (602), by means of radio network terminals comprised in a testing apparatus, simultaneous data connections in accordance with the Transmission Control Protocol / Internet Protocol TCP/IP protocol or the User Datagram Protocol / Internet Protocol UDP/IP protocol from a host computer comprised in the testing apparatus to at least one server connected to the radio network;
and measuring (608) by the host computer each established data connection separately;
**characterized by**
establishing (604) each data connection from the host computer to a different public Internet Protocol IP address of the server; and
dynamically establishing (606) a dedicated unambiguous route for each data connection, whereby the data connections to different IP addresses travel along different routes via different terminals and their air interfaces.

6. A method according to claim 5, **characterized by** dynamically establishing (606) a dedicated unambiguous route for each data connection by defining a dedicated socket, netmask and gateway for each separate IP address in a routing table.

7. A method according to claim 5 or 6, **characterized by** establishing (602) the data connections as dial-up connections.

8. A method according to any of preceding claims 5 to 7, **characterized in that** the data connections established by the terminal comprise at least one of the following: data connections of one operator implemented by the same data transfer technique, data connections of one operator implemented by different data transfer techniques, data connections of different operators implemented by the same data transfer techniques, data connections of different operators implemented by different data transfer techniques.

9. A computer program product, which encodes a computer software, that, when installed in a host computer, provides the host computer with
host program means for establishing, utilizing radio network terminals, simultaneous data connections in accordance with the Transmission Control Protocol / Internet Protocol TCP/IP protocol or the User Datagram Protocol / Internet Protocol UDP/IP protocol to at least one server connected to the data network, and
measuring program means for measuring each established data connection separately,
**characterized in that** the host program means are configured to establish each data connection to a different public Internet protocol IP address of the server and to dynamically establish a dedicated unambiguous route for each data connection, whereby data connections to different IP addresses travel along different routes via different radio network terminals and their interfaces.

10. A computer program product according to claim 9, **characterized in that** the host program means are configured to dynamically establish a dedicated unambiguous route for each data connection by defining a dedicated socket, netmask and gateway for each different IP address in a routing table.

11. A computer program product according to claim 9 or 10, **characterized in that** the host program means are configured to establish the data connections as dial-up connections.

12. A computer program product according to any one of preceding claims 9 to 11, **characterized in that** the data connections established by the terminal comprise at least one of the following: data connections of one operator implemented by the same data transfer technique, data connections of one operator implemented by different data transfer techniques, data connections of different operators implemented by the same data transfer techniques, data connections of different operators implemented by different data transfer techniques.

## Patentansprüche

1. Prüfvorrichtung (100) für Funknetz-Datenverbindungen, die umfasst:
wenigstens zwei Endgeräte (118, 120) eines Funknetzes (134), und
einen Hostrechner (102), der konfiguriert ist, um mittels der Endgeräte (118, 120) simultane Datenverbindungen (106, 108) gemäß dem Protokoll Transmission Control Protocol / Internet Protocol TCP/IP oder dem Protokoll User Datagram Protocol / Internet Protocol UDP/IP zu wenigstens einem Server (148), der mit dem Funknetz (134) verbunden ist, aufzubauen und um eine jede aufgebaute Datenverbindung (106, 108) getrennt zu messen,
**dadurch gekennzeichnet, dass** der Hostrechner (102) konfiguriert ist, um jeweils jede Datenverbindung (106, 108) zu einer verschiedenen öffentlichen Internet-Protocol-IP-Adresse des Servers aufzubauen und um dynamisch einen zweckgebundenen, eindeutigen Leitweg für eine jede Datenverbindung (106, 108) aufzubauen, wodurch die Datenverbindungen (106, 108) zu verschiedenen IP-Adressen entlang verschiedenen Leitwegen über verschiedene Endgeräte (118, 120) und ihre Luftschnittstellen gehen.

2. Prüfvorrichtung nach Anspruch 1, **dadurch gekennzeichnet, dass** der Hostrechner (102) konfiguriert ist, um dynamisch einen zweckgebundenen, eindeutigen Leitweg für eine jede Datenverbindung (106, 108) einzurichten, indem ein zweckgebundenes Socket, eine Netzwerkmaske und ein Gateway für eine jede der verschiedenen IP-Adressen in einer Leitwegtabelle definiert werden.

3. Prüfvorrichtung nach Anspruch 1 oder 2, **dadurch gekennzeichnet, dass** der Hostrechner (102) konfiguriert ist, um die Datenverbindungen (106, 108) als Wählverbindungen aufzubauen.

4. Prüfvorrichtung nach einem der vorhergehenden Ansprüche, **dadurch gekennzeichnet, dass** die Datenverbindungen (106, 108), die durch das Endgerät (118, 120) eingerichtet werden, wenigstens eines der Folgenden umfassen: Datenverbindungen einer Vermittlung, die durch das gleiche Datenübertragungsverfahren implementiert werden, Datenverbindungen einer Vermittlung, die durch verschiedene Datenübertragungsverfahren implementiert werden, Datenverbindungen verschiedener Vermittlungen, die durch die gleichen Datenübertragungsverfahren implementiert werden, Datenverbindungen verschiedener Vermittlungen, die durch verschiedene Datenübertragungsverfahren implementiert werden.

5. Verfahren zum Prüfen von Funknetz-Datenverbindungen, das umfasst:
Aufbauen (602), mittels Funknetz-Endgeräten, die in einer Prüfvorrichtung beinhaltet sind, simultaner Datenverbindungen gemäß dem Protokoll Transmission Control Protocol / Internet Protocol TCIP/IP beziehungsweise dem Protokoll User Datagram Protocol / Internet Protocol UDP/IP von einem Hostrechner, der in der Prüfvorrichtung beinhaltet ist, zu wenigstens einem Server, der mit dem Funknetz verbunden ist;
und getrenntes Messen (608), mittels des Hostrechners, einer jeden aufgebauten Datenverbindung;
**gekennzeichnet durch**
Aufbauen (604) einer jeden Datenverbindung von dem Hostrechner zu einer unterschiedlichen Internet-Protocol-IP-Adresse des Servers; und
dynamisches Aufbauen (606) eines zweckgebundenen, eindeutigen Leitweges für eine jede Datenverbindung, wodurch die Datenverbindungen zu verschiedenen IP-Adressen entlang verschiedenen Leitwegen über verschiedene Endgeräte und ihre Luftschnittstellen gehen.

6. Verfahren nach Anspruch 5, **gekennzeichnet durch** dynamisches Aufbauen (606) eines zweckgebundenen, eindeutigen Leitweges für eine jede Datenverbindung **durch** Festlegen eines Sockets, einer Netzwerkmaske und eines Gateway für eine jede separate IP-Adresse in einer Leitwegtabelle.

7. Verfahren nach Anspruch 5 oder 6, **gekennzeichnet durch** Aufbauen (602) der Datenverbindungen als Wählverbindungen.

8. Verfahren nach einem der vorhergehenden Ansprüche 5 bis 7, **dadurch gekennzeichnet, dass** die von dem Endgerät aufgebauten Datenverbindungen wenigstens eines der Folgenden umfassen: Datenverbindungen einer Vermittlung, die durch das gleiche Datenübertragungsverfahren implementiert werden, Datenverbindungen einer Vermittlung, die durch verschiedene Datenübertragungsverfahren implementiert werden, Datenverbindungen verschiedener Vermittlungen, die durch die gleichen Datenübertragungsverfahren implementiert werden, Datenverbindungen verschiedener Vermittlungen, die durch verschiedene Datenübertragungsverfahren implementiert werden.

9. Computerprogramm-Produkt, das eine Computersoftware verschlüsselt, die, wenn sie auf einem Hostrechner installiert ist, dem Hostrechner Hostrechnerprogramm-Einrichtungen zum Aufbauen, Nutzen von Funknetz-Endgeräten, simultanen Datenverbindungen gemäß dem Protokoll Transmission Control Protocol / Internet Protocol TCP/IP beziehungsweise dem Protokoll User Datagram Protocol / Internet Protocol UDP/IP zu wenigstens einem Server, der mit dem Datennetzwerk verbunden ist, bereitstellt, sowie
Messprogramm-Einrichtungen zum getrennten Messen einer jeden aufgebauten Datenverbindung,
**dadurch gekennzeichnet, dass** die Hostrechner-Programmeinrichtungen konfiguriert sind, um eine jede Datenverbindung zu einer verschiedenen öffentlichen Internet-Protocol-IP-Adresse des Servers aufzubauen und um dynamisch einen zweckgebundenen, eindeutigen Leitweg für eine jede Datenverbindung aufzubauen, wodurch Datenverbindungen zu verschiedenen IP-Adressen entlang verschiedenen Leitwegen über verschiedene Funknetz-Endgeräte und ihre Schnittstellen gehen.

10. Computerprogramm-Produkt nach Anspruch 9, **dadurch gekennzeichnet, dass** die Hostrechner-Programmeinrichtungen konfiguriert sind, um dynamisch einen zweckgebundenen, eindeutigen Leitweg für eine jede Datenverbindung aufzubauen, indem sie ein zweckgebundenes Socket, eine Netzwerkmaske und ein Gateway für eine jede unterschiedliche IP-Adresse in einer Leitwegtabelle festlegen.

11. Computerprogramm-Produkt nach Anspruch 9 oder 10, **dadurch gekennzeichnet, dass** die Hostrechner-Programmeinrichtungen konfiguriert sind, um die Datenverbindungen als Wählverbindungen aufzubauen.

12. Computerprogramm-Produkt nach einem der vorhergehenden Ansprüche 9 bis 11, **dadurch gekennzeichnet, dass** die von dem Endgerät aufgebauten Datenverbindungen wenigstens eines der Folgenden umfassen: Datenverbindungen einer Vermittlung, die durch das gleiche Datenübertragungsverfahren implementiert werden, Datenverbindungen einer Vermittlung, die durch verschiedene Datenübertragungsverfahren implementiert werden, Datenverbindungen verschiedener Vermittlungen, die durch die gleichen Datenübertragungsverfahren implementiert werden, Datenverbindungen verschiedener Vermittlungen, die durch verschiedene Datenübertragungsverfahren implementiert werden.

## Revendications

1. Appareil d'essai (100) pour des connexions de données de réseau de radiocommunication comprenant :
au moins deux terminaux (118, 120) de réseau de radiocommunication (134), et
un ordinateur hôte (102), configuré pour établir, au moyen des terminaux (118, 120), des connexions de données simultanées (106, 108) conformément au protocole TCP/IP (protocole de contrôle de transmission/protocole Internet) ou au protocole UDP/IP (protocole de datagramme utilisateur/protocole Internet) vers au moins un serveur (148) connecté au réseau de radiocommunication (134), et pour mesurer chaque connexion de données établie (106, 108) séparément,
**caractérisé en ce que** l'on configure l'ordinateur hôte (102) pour établir chaque connexion de données (106, 108) à une adresse IP (protocole Internet) publique différente du serveur et pour établir dynamiquement un trajet non équivoque dédié pour chaque connexion de données (106, 108), moyennant quoi les connexions de données (106, 108) à des adresses IP différentes circulent le long de différents trajets par l'intermédiaire de terminaux (118, 120) différents et leurs interfaces air.

2. Appareil d'essai selon la revendication 1, **caractérisé en ce que** l'on configure l'ordinateur hôte (102) pour établir dynamiquement un trajet non équivoque dédié pour chaque connexion de données (106, 108) en définissant une prise dédiée, un masque réseau et une passerelle pour chaque adresse IP différente dans une table d'acheminement.

3. Appareil d'essai selon la revendication 1 ou 2, **caractérisé en ce que** l'on configure l'ordinateur hôte 102 pour établir les connexions de données (106, 108) comme connexions commutées.

4. Appareil d'essai selon l'une quelconque des revendications précédentes, **caractérisé en ce que** les connexions de données (106, 108) établies par le terminal (118, 120) comprennent au moins l'une des connexions suivantes : connexions de données d'un opérateur mises en oeuvre grâce à la même technique de transfert de données, connexions de données d'un opérateur mises en oeuvre grâce à des techniques différentes de transfert de données, connexions de données de différents opérateurs mises en oeuvre grâce aux mêmes techniques de transfert de données, connexions de données de différents opérateurs mises en oeuvre grâce à des techniques différentes de transfert de données.

5. Procédé permettant de tester des connexions de données de réseau de radiocommunication, comprenant :
l'établissement (602), au moyen de terminaux de réseau de radiocommunication, compris dans un appareil d'essai de connexions de données simultanées conformément au protocole TCP/IP (protocole de contrôle de transmission/protocole Internet) ou au protocole UDP/IP (protocole de datagramme utilisateur/protocole Internet) à partir d'un ordinateur hôte compris dans l'appareil d'essai vers au moins un serveur connecté au réseau de radiocommunication ;
et la mesure (608) par l'ordinateur hôte de chaque connexion de données établie séparément ;
**caractérisé par**
l'établissement (604) de chaque connexion de données à partir de l'ordinateur hôte vers une adresse IP (protocole Internet) publique différente du serveur ; et
l'établissement dynamique (606) d'un trajet non équivoque dédié pour chaque connexion de données, moyennant quoi des connexions de données vers différentes adresses IP circulent le long de trajets différents par l'intermédiaire de terminaux différents et de leurs interfaces air.

6. Procédé selon la revendication 5, **caractérisé par** l'établissement dynamique (606) d'un trajet non équivoque dédié pour chaque connexion de données en définissant une prise dédiée, un masque réseau et une passerelle pour chaque adresse IP séparée dans un tableau d'acheminement.

7. Procédé selon la revendication 5 ou 6, **caractérisé par** l'établissement (602) des connexions de données comme connexions commutées.

8. Procédé selon l'une quelconque des revendications 5 à 7, **caractérisé en ce que** les connexions de données établies par le terminal comprennent au moins l'une des connexions suivantes : connexions de données d'un opérateur mises en oeuvre grâce à la même technique de transfert de données, connexions de données d'un opérateur mises en oeuvre grâce à des techniques différentes de transfert de données, connexions de données de différents opérateurs mises en oeuvre grâce aux mêmes techniques de transfert de données, connexions de données de différents opérateurs mises en oeuvre grâce à des techniques différentes de transfert de données.

9. Produit de programme informatique, qui code un logiciel informatique, qui, lorsqu'il est installé sur un ordinateur hôte, dote l'ordinateur hôte de :
moyens de programme hôte permettant d'établir, en utilisant des terminaux de réseau de radiocommunication, des connexions de données simultanées conformément au protocole TCP/IP (protocole de contrôle de transmission/protocole Internet) ou au protocole UDP/IP (protocole de datagramme utilisateur/protocole Internet) à au moins un serveur connecté au réseau de données et
moyens de programme de mesure permettant de mesurer chaque connexion de données établie séparément,
**caractérisé en ce que** l'on configure des moyens de programme hôte pour établir chaque connexion de données à une adresse IP (protocole Internet) publique différente du serveur et pour établir dynamiquement un trajet non équivoque dédié pour chaque connexion de données, moyennant quoi les connexions de données à différentes adresses IP circulent le long de trajets différents par l'intermédiaire de terminaux de réseau de radiocommunication différents et de leurs interfaces.

10. Produit de programme informatique selon la revendication 9, **caractérisé en ce que** les moyens de programme hôte sont configurés pour établir dynamiquement un trajet non équivoque dédié pour chaque connexion de données en définissant une prise dédiée, un masque réseau et une passerelle pour chaque adresse IP différente dans une table d'acheminement.

11. Produit de programme informatique selon la revendication 9 ou 10, **caractérisé en ce que** les moyens de programme hôte sont configurés pour établir les connexions de données comme connexions commutées.

12. Produit de programme informatique selon l'une quelconque des revendications précédentes 9 à 11, **caractérisé en ce que** les connexions de données établies par le terminal comprennent au moins l'une des connexions suivantes : connexions de données d'un opérateur mises en oeuvre grâce à la même technique de transfert de données, connexions de données d'un opérateur mises en oeuvre grâce à des techniques différentes de transfert de données, connexions de données de différents opérateurs mises en oeuvre grâce aux mêmes techniques de transfert de données, connexions de données de différents opérateurs mises en oeuvre grâce à des techniques différentes de transfert de données.
